# EUROPEAN PATENT APPLICATION

(11) **EP 3 489 883 A1**
(43) Date of publication of application: **29.05.2019**
(21) Application number: 17831025.6
(22) Date of filing: 19.07.2017
(51) Int. Cl.: G06Q 50/02, B02B 5/02, B02B 7/00, G05B 19/418

(54) **OPERATION ASSISTANCE SYSTEM FOR GRAIN PROCESSING FACILITY**

(30) Priority: 22.07.2016 JP 2016144295
(71) Applicant: Satake Corporation, Chiyoda-ku Tokyo 101-0021 (JP)
(72) Inventor: MATSUDA, Masanori, Tokyo 101-0021 (JP); HAYASHI, Noriyuki, Tokyo 101-0021 (JP)
(74) Representative: Hoffmann Eitle
(86) International application number: PCT/JP2017/026017
(87) International publication number: WO 2018/016509

(57) **Abstract**

Provided is a coordination system between a common drying facility and a rice milling factory, capable of reproducing milled rice or cooked rice with favorable quality for a consumer. An operation assistance system for a grain processing facility includes: a first reception portion configured to receive an input of evaluation information about evaluation in at least one of a processed state and taste of a first grain, the evaluation information being directly or indirectly correlated with a characteristic and a processing history of the first grain; a database configured to store, in a correlated manner, the characteristic, the processing history, and the evaluation information which are received; a second reception portion configured to receive a second characteristic of a second grain delivered to the grain processing facility; and a calculation portion configured to calculate, based on the received second characteristic and information accumulated in the database, an operational parameter to be used in processing the second grain in the grain processing facility.

## Description

### TECHNICAL FIELD

The present invention relates to a technique for controlling operation of a grain processing facility.

### BACKGROUND ART

PTL 1 described below discloses a follow-up survey system of rice. The system includes: a product receiving step where unhusked rice is measured for each producer; a primary storing step where received unhusked rice is stored; a drying step where the stored unhusked rice is dried to a predetermined moisture; a storing step where the dried unhusked rice is stored; a husking step where stored unhusked rice is processed into husked rice; and a shipping step where husked rice obtained by husking the unhusked rice is shipped. A main control panel, which integrally manages controls of the respective steps, records a passage history in the respective steps, and data is transferred to and saved in a management computer and hence, an operation history can be traced.

With such a system, an operation history becomes traceable. To be more specific, data on a weight and moisture of the received unhusked rice and a cultivar of received product in the product receiving step, primary storing data in the primary storing step where unhusked rice is stored separately according to a cultivar and moisture, drying data on unhusked rice in a storage bin in the drying step, and data in storing step where the unhusked rice reaching a predetermined moisture is stored in a silo are saved in a computer in a correlated manner with shipping lot numbers or the like applied to shipped husked rice. By using the saved information as preparing information, storing information, drying information, and received product information, it is possible to obtain processing and preparing information and a passing route in each step. Further, a production process and history of shipped husked rice can be traced toward the aim of maintaining quality and reliability of rice supplied to the consumer.

The system disclosed in PTL 1 is a general traceability system where processing and preparing information and the passing route in each step can be obtained from the shipping lot number or the like as preparing information, storing information, drying information, or received product information. Accordingly, in the case where milled rice or cooked rice with favorable quality is acquired by coincidence, and thus reproducing such favorable quality is attempted, no detailed data has been acquired and hence, it is not possible to reproduce the milled rice or cooked rice with that favorable quality.

### CITATION LIST

### PATENT LITERATURE

PTL 1: Japanese Patent Application Public Disclosure No. 2005-309902

### SUMMARY OF INVENTION

### TECHNICAL PROBLEM

The present invention has been made in view of the above-mentioned problems, and it is an object of the present invention to provide an operation assistance system for a grain processing facility which can reproduce processing or palatability which is used or obtained when grain can be processed or can acquire palatability with favorable quality for a consumer (also including people from other countries in addition to Japanese people).

### SOLUTION TO PROBLEM

According to a first aspect of the present invention, there is provided an operation assistance system for a grain processing facility. The operation assistance system includes: a first reception portion configured to receive an input of evaluation information about evaluation in at least one of a processed state and taste of a first grain, the evaluation information being directly or indirectly correlated with a characteristic and a processing history of the first grain; a database configured to store, in a correlated manner, the characteristic, the processing history, and the evaluation information which are received; a second reception portion configured to receive a second characteristic of a second grain delivered to the grain processing facility; and a calculation portion configured to calculate, based on the received second characteristic and information accumulated in the database, an operational parameter to be used in processing the second grain in the grain processing facility.

With such an operation assistance system, by exploiting traceability technology, grain is distributed such that characteristic and processing history of the grain can be traced, and evaluation in at least one of a processed state and taste of the grain is acquired from a retail store, ready-made meal supplier/restaurant, consumer or the like. Accordingly, it is possible to acquire a database where the characteristic, the processing history, the evaluation information, and the evaluation are correlated with each other. Operational parameters for a grain processing facility are calculated based on this database so that it is possible to provide grain processing which can preferably reproduce milled rice or cooked rice with desirable quality. The Characteristic and the processing history of the first grain and the evaluation information may be directly correlated with each other, or may be indirectly correlated with each other through grain identification information. For example, the first reception portion may receive an input of identification information, and an input of evaluation information correlated with the identification information.

### BRIEF DESCRIPTION OF DRAWINGS

Fig. 1 is a conceptual view of a grain processing facility according to one embodiment of the present invention.
Fig. 2 is a view showing a schematic configuration of a country elevator.
Fig. 3 is a view showing a schematic configuration of a rice milling factory.
Fig. 4 is a conceptual view of processing for calculating operational parameters which should be used in a contracted factory.
Fig. 5 is a flowchart showing one example of fee charging processing in a fee charging system.

### DESCRIPTION OF EMBODIMENTS

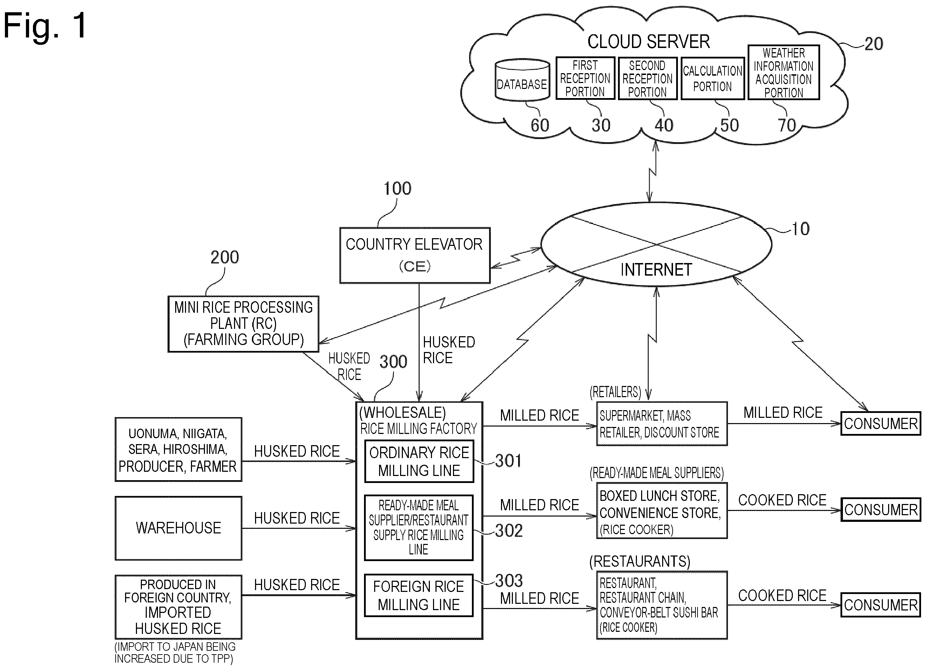

As shown in Fig. 1, common drying facilities (a country elevator 100 and a mini rice processing plant 200), a rice milling factory 300, retailers, and consumers have the following relationship, for example. Husked rice is supplied to the rice milling factory 300 from the country elevator (CE) 100, the mini rice processing plant (RC) 200, a farmer, a warehouse, or imported rice. An ordinary rice milling line 301, a ready-made meal supplier/restaurant supply rice milling line 302, and a foreign rice milling line 303 are provided in the rice milling factory 300 as rice milling lines. The rice milling line of the rice milling factory 300 is selected depending on the usage. For example, when a retailer, ready-made meal supplier/restaurant, or consumer desires milled rice of which importance is placed on palatability, husked rice delivered from a producer farmer in Uonuma, Niigata is selected in the rice milling factory 300. With such a selection, the rice milling line is selected from the ordinary rice milling line 301 and the ready-made meal supplier/restaurant supply rice milling line 302 depending on the usage. On the other hand, when a convenience store or the like desires milled rice of which importance is placed on quantity, husked rice delivered from the country elevator 100 is selected, and the ready-made meal supplier/restaurant supply rice milling line 302 is selected as a rice milling line. Consumers may also include people from other countries. Accordingly, when a non-Japanese desires foreign rice, imported husked rice produced in a foreign country is selected, and the foreign rice milling line 303 is selected.

Various big data is acquired. A large number of suppliers, such as the country elevator 100, the mini rice processing plant 200, and respective farmers, are secured as a route for acquiring rice. A plurality of rice milling lines are provided in the rice milling factory 300. Data on the terminal end side in the distribution which is close to consumers is acquired (a taste analyzer installed in a test chamber (inspection chamber) in the rice milling factory 300, or a taste analyzer installed in a retailer, ready-made meal supplier/restaurant or the like is used, for example). With the above-mentioned operations, it is possible to reproduce a drying and preparing method and a rice milling method which are used when milled rice or cooked rice with favorable quality for a consumer (also including people from other countries in addition to a Japanese) is made.

To be more specific, in Fig. 1, husked rice, milled rice and cooked rice are distributed so that rice characteristics and processing histories in the respective facilities are traceable by exploiting traceability technology. The rice characteristics are arbitrary factors which may affect the quality of rice. Such factors include a production area, a cultivar, weather conditions, soil conditions, a crop situation and the like, for example. A retail store, ready-made meal supplier/restaurant, or consumer sends a palatability value or evaluation in palatability of rice via the Internet 10 together with characteristics and processing histories of rice, or rice identification information (these are recorded in a bar code seal or a tag on a container or packaging, for example). This information is received by a first reception portion 30, and is stored in a database 60. A second reception portion 40 receives characteristics of rice to be delivered to the rice milling factory 300 from the rice milling factory 300 via the Internet 10. A calculation portion 50 calculates, based on the rice characteristics received by the second reception portion 40 and information accumulated in the database 60, operational parameters to be used in processing husked rice in the rice milling factory 300. The operational parameters are provided to the rice milling factory 300 via the Internet 10, and rice milling processing is performed in the rice milling factory 300 using the operational parameters. Any network, such as a dedicated line, may be adopted in place of the Internet 10.

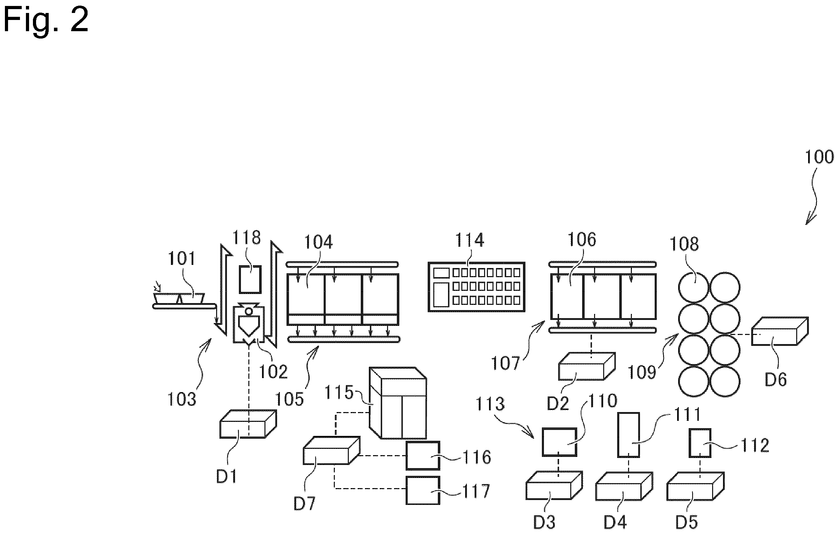

Fig. 2 is a view showing a schematic configuration of the country elevator 100. The country elevator 100 is a common grain drying and preparing facility where tasks from drying of grain to packaging and shipping are performed. As shown in the drawing, the country elevator 100 includes product receiving hoppers 101, a product receiving portion 103, an aeration-drying portion 105, a flame-drying portion 107, a silo portion 109, a husker 110, a sorter 111, and a preparing portion 113. The product receiving hopper 101 mainly receives fresh grain which is carried into the country elevator from a farmer. The product receiving portion 103 includes a rough sorting machine 118 and a received product measuring machine 102. The aeration-drying portion 105 includes a plurality of aeration dryers 104. The flame-drying portion 107 includes flame dryers 106 which dry grain to a predetermined moisture while circulating the grain. The silo portion 109 includes a plurality of silos 108 for storing dried grain. The husker 110 takes out the dried grain from the silo 108 and husks the grain. The sorter 111 performs screening of the husked grain. The preparing portion 113 measures and packages the screened grain.

The country elevator 100 further includes, as ancillary facilities, a test dryer 114, an autonomous inspection device 115, a grain particle discriminator 116, and a taste measuring instrument 117. The test dryer 114 dries sample unhusked rice, extracted from the product receiving portion 103, to a predetermined moisture value. The autonomous inspection device 115 performs hulling processing on the dried sample unhusked rice and separates the dried sample unhusked rice into whole grain and screenings, and then calculates a yield rate from respective weight values of whole grain and screenings. The grain particle discriminator 116 takes out grain particles from the autonomous inspection device 115 and optically calculates the grade and the like of the grain particles. The taste measuring instrument 117 optically calculates a palatability value or the like. The grade is an index which is calculated by actually measuring the percentage of whole grain, moisture percentage, and the percentage of damaged grains, such as colored grains and immature grains. The index significantly affects taste and hence, the index can be considered as one of taste indexes. A palatability value is a taste index which is calculated based on amylose, protein, moisture and fatty acids measured by a near-infrared analyzer. The palatability value may be acquired by a sensory test in place of or in addition to the analysis test.

Data recording devices D which acquire various data are electrically connected to respective apparatuses forming the country elevator 100. For example, a data recording device D1 is connected to the rough sorting machine 118 and the received product measuring machine 102. The data recording device D1 acquires rough sorting data (weight of grain with rachis branches (unhusked rice with rice rachis), weight of fine unhusked rice, percentage of grain with rachis branches, weight of straw, ratio of unhusked rice to straw and the like) and received product data (weight value of grain particles, moisture value of received product, cultivar, owner code of farmer, production area (location of farm field) and the like). That is, the data recording device D1 acquires data related to the characteristics of rice which is delivered. A data recording device D2 is connected to the flame dryer 106. The data recording device D2 acquires drying data (initial moisture value of unhusked rice before the drying operation, final moisture value of the unhusked rice after the drying operation, drying loss rate, total drying time, fuel consumption rate, total amount of power and the like). Further, a data recording device D3 is connected to the husker 110. The data recording device D3 acquires husking data (hulling performance, hulling rate, mixing rate of immature grains, frequency of exchanging hulling roll, maximum current value, average current value, minimum current value, total amount of power and the like).

A data recording device D4 is connected to the sorter 111. The data recording device D4 acquires sorting data (removal rate (sorting rate) of defective grains, rotational speed of a sorting cylinder of a rotary sorter, the number of times of operations of an ejector of a color sorter, maximum current value, average current value, minimum current value, total amount of power and the like). A data recording device D5 is connected to a measuring and packaging machine 112. The data recording device D5 acquires measuring and packaging data (measurement frequency, cumulative total value of (shipped) measurement, the cumulative number of (shipped) packaging bags, total amount of power and the like). Further, a data recording device D6 is connected to the silos 108. The data recording device D6 acquires storage data (storage period, frequency of rotation, maximum temperature of grain, minimum temperature of grain, average temperature of grain and the like).

A data recording device D7 is connected to the autonomous inspection device 115, the grain particle discriminator 116 and the taste measuring instrument 117. The data recording device D7 acquires autonomous inspection data (weight values of unhusked rice, husked rice, whole grain, and screenings, moisture, yield rate, cultivar, owner code of farmer, and production area (location of farm field) and the like), grade data (weight values of whole grain, screenings, colored grains and the like), and palatability data (protein content rate, amylose content rate, palatability sensory evaluation, palatability value and the like).

In the country elevator 100, when rice is delivered to the country elevator 100, the data recording device D1 acquires received product data, such as a producer, a cultivar, and a production area, for each sample of a received product. This operation is performed such that a delivery person or the operator of the country elevator 100 inputs such data by using a user interface. Next, the received rice is subjected to sorting and drying processing by various installations so that the data recording devices D2 to D7 acquire preparing processing data which are obtained by quantifying processing conditions of the preparing machine at the time of the sorting and drying processing. Further, the data recording device D7 actually measures index values (grade data and palatability data in this embodiment) of taste of the processed rice. Information acquired by the data recording devices D1 to D7 is sent to an operation assistance system 20 via the Internet 10 together with rice identification information in a correlated manner. As the rice identification information, a product reception number which is applied when a product is received may be used, or a dedicated ID may be applied for each of lots.

The mini rice processing plant 200 differs from the country elevator 100 in that the mini rice processing plant 200 is not provided with the silo portion 109, and has a smaller scale than the country elevator 100. However, other configurations of the mini rice processing plant 200 are similar to corresponding configurations of the country elevator 100. Accordingly, the detailed description of the mini rice processing plant 200 is omitted.

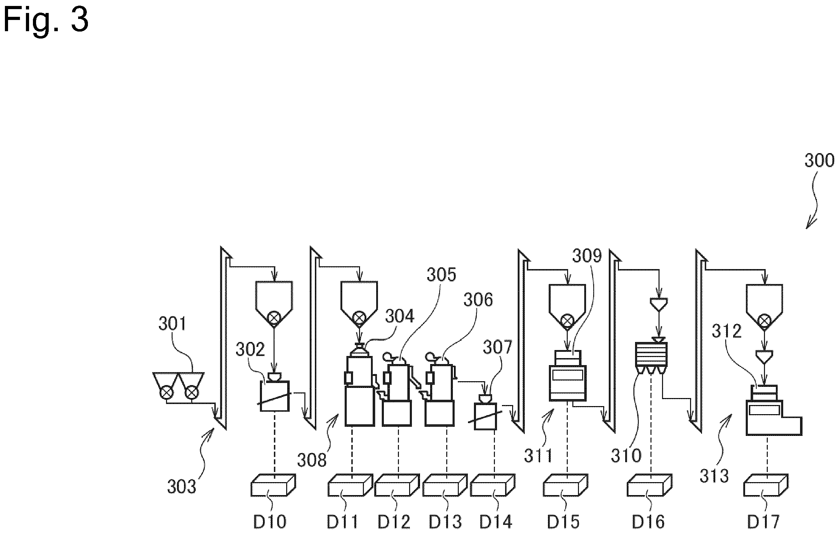

Fig. 3 is a view showing a schematic configuration of the rice milling factory 300. In the rice milling factory 300, husked rice which is delivered to the factory is milled and, thereafter, is sorted and measured and bagged and, then, the rice is shipped. The rice milling factory 300 includes: a product receiving portion 303; a rice milling portion 308; a screening portion 311; and a measuring and packaging portion 313. The product receiving portion 303 includes product receiving hoppers 301 which receive husked rice delivered to the rice milling factory 300, and a rough sorting machine 302. The rice milling portion 308 includes a plurality of rice milling machines 304, 305, 306, and a stone removing machine 307. The screening portion 311 includes a color sorter 309 and a sieving machine 310. The measuring and packaging portion 313 includes a measuring and packaging machine 312.

Data recording devices D which acquire various data are electrically connected to respective apparatuses. For example, a data recording device D10 is connected to the product receiving hoppers 301 and the rough sorting machine 302. The data recording device D10 acquires received product data (weight value of grain particles, moisture value of received product, cultivar, owner code of farmer, production area (location of farm field) and the like) and rough sorting data (percentage of mixing of foreign substance, such as a string-like material, weight of whole grain and the like). A data recording device D11 is connected to the rice milling machine (first machine) 304. The data recording device D11 acquires first machine polishing data (current value, yield, whiteness, total driving time, total amount of power and the like). In the same manner, a data recording device D12 is connected to the rice milling machine (second machine) 305. The data recording device D12 acquires second machine polishing data. A data recording device D13 is connected to the rice milling machine (third machine) 306. The data recording device D13 acquires third machine polishing data. Further, a data recording device D14 is connected to the stone removing machine 307. The data recording device D14 acquires stone removing data (weight of stone particles, weight of whole grain, mixing rate of stones, total amount of power and the like).

A data recording device D15 is connected to the color sorter 309. The data recording device D15 acquires sorting data (removal rate (sorting rate) of defective grains, the number of times of operations of an ejector of the color sorter, maximum current value, average current value, minimum current value, total amount of power and the like). Further, a data recording device D16 is connected to the sieving machine 310. The data recording device D16 acquires sieving data (rotational speed of sieving machine, percentage of crushed grains, percentage of whole grain, total amount of power and the like). A data recording device D17 is connected to the measuring and packaging machine 312. The data recording device D17 acquires measuring and packaging data (measurement frequency, cumulative total value of (shipped) measurement, the cumulative number of (shipped) packaging bags, total amount of power and the like).

Information acquired by the data recording devices D10 to D17 is sent to the operation assistance system 20 via the Internet 10 together with rice identification information in a correlated manner. Also in the rice milling factory 300, in the same manner as the country elevator 100, at least one of autonomous inspection data, grade data and palatability data may be acquired and sent to the operation assistance system 20.

As described above, each of the country elevator 100, the mini rice processing plant 200 and the rice milling factory 300, which provides various data received by the first reception portion 30, may also be referred to as an "information providing factory". Further, information provided to the operation assistance system 20 from the information providing factory may also be referred to as "provided information".

In this embodiment, the operation assistance system 20 can be realized in the form of a cloud server connected to the Internet 10. However, the operation assistance system 20 may also be an arbitrary information processor capable of communication through any network. The operation assistance system 20 includes the first reception portion 30, the second reception portion 40, the calculation portion 50, and the database 60. These functional portions can be realized by executing predetermined programs stored in a memory.

The first reception portion 30 receives an input of evaluation information about evaluation in at least one of a processed state and taste of rice via the Internet 10, which evaluation information is correlated with characteristics and processing histories of rice. As described above, characteristics and processing histories of rice are acquired through the data recording devices D in the country elevator 100, the mini rice processing plant 200 or the rice milling factory 300. The characteristics and processing histories of rice may be directly correlated with evaluation information, or may be indirectly correlated with evaluation information via rice identification information.

In this embodiment, rice identification information is recorded in a bar code, a QR code (registered trademark), a tag or the like on a container or packaging of rice in the country elevator 100, the mini rice processing plant 200 or the rice milling factory 300. This identification information is passed onto a bar code, a QR code, a tag or the like on another container or packaging even in the case where, in a distribution process until rice reaches the consumer, the rice is transferred to another container or packaging (for example, in the case where husked rice, delivered from the country elevator 100 to the rice milling factory 300, is milled in the rice milling factory 300 and, thereafter, is packaged in another container or packaging, or in the case where milled rice which is delivered to a ready-made meal supplier is processed and, thereafter, is packaged in another container or packaging). For example, in the case where a container or packaging is changed, identification information is passed onto by a reader and writer for a code or a tag. Further, information acquired through the data recording devices D in the country elevator 100, the mini rice processing plant 200 or the rice milling factory 300 is sent to the operation assistance system 20 in a state correlated with the identification information. Each of the country elevator 100, the mini rice processing plant 200 and the rice milling factory 300, which provides such information, is also referred to as an "information providing factory". The first reception portion 30 receives information which is sent in this manner.

The first reception portion 30 also receives evaluation information which is sent to the operation assistance system 20 by a retail store, ready-made meal supplier/restaurant, or consumer. This evaluation information is sent to the operation assistance system 20 from an information terminal of the retail store, ready-made meal supplier/restaurant, or consumer in a state correlated with the above-mentioned identification information. A mail address or URL of the operation assistance system 20 may be recorded on in a bar code seal, a QR code seal, a tag or the like on a container or packaging of rice may also record, together with the rice identification information. For example, the retail store or the ready-made meal supplier/restaurant may fill out evaluation in at least one of a processed state and taste of rice on a web page (where the rice identification information recorded in the QR code is automatically inputted) which is displayed by reading a QR code on the container or packaging of delivered milled rice with a mobile terminal. A consumer who purchased the milled rice or processed food from the retail store or the ready-made meal supplier may also send evaluation in taste of rice to the operation assistance system 20 by using his/her own mobile terminal by a method similar to that used by the retail store or the ready-made meal supplier/restaurant. Further, a consumer who is served a processed food in a restaurant may input evaluation in taste of rice into an information terminal prepared by the restaurant. In this case, the restaurant may send identification information which corresponds to the processed food served to the consumer and the evaluation inputted by the consumer to the operation assistance system 20 in a correlated manner.

The database 60 stores rice characteristics, processing histories and evaluation information received by the first reception portion 30, in a correlated manner. In this embodiment, these correlations are made via rice identification information. A weather information acquisition portion 70 acquires weather information for a rice production area, which area is received by the first reception portion 30, via the Internet 10. The weather information acquired by the weather information acquisition portion 70 may also be stored in the database 60 in a manner that the weather information is correlated with rice characteristics, processing histories and the evaluation information. Such weather information is provided on the Internet 10 by the Japan Meteorological Agency or a commercial weather information company, for example. This weather information is weather data which corresponds to a production area of rice and a harvest year forming the base of each data group accumulated in the database 60. To be more specific, weather information may be cumulative hours of sunlight or cumulative temperature (cumulative value of daily average temperatures) within a period from sowing to harvesting, for example. Cumulative hours of sunlight affect maturity of rice, and cumulative temperature affects protein content. Accordingly, the cumulative hours of sunlight and the cumulative temperature are important factors for producing rice with desirable taste.

The second reception portion 40 receives rice characteristics from the country elevator 100, the mini rice processing plant 200 or the rice milling factory 300 via the Internet 10. Information which the second reception portion 40 receives is information on rice which is delivered to the country elevator 100, the mini rice processing plant 200 or the rice milling factory 300, but is not yet processed. The information is sent from the country elevator 100, the mini rice processing plant 200 or the rice milling factory 300 which has a contract to receive operation assistance service performed by the operation assistance system 20 (hereinafter, also referred to as a "contracted factory"). The contracted factory may or may not be the same as the information providing factory. For example, the contracted factory may send individual characteristics to be received by the second reception portion 40 to the operation assistance system 20 together with an operation assistance request.

The calculation portion 50 calculates, based on information of the rice characteristics received by the second reception portion 40 and information accumulated in the database 60, operational parameters which should be used in a contracted factory sending the information when processing rice which corresponds to information received by the second reception portion 40.

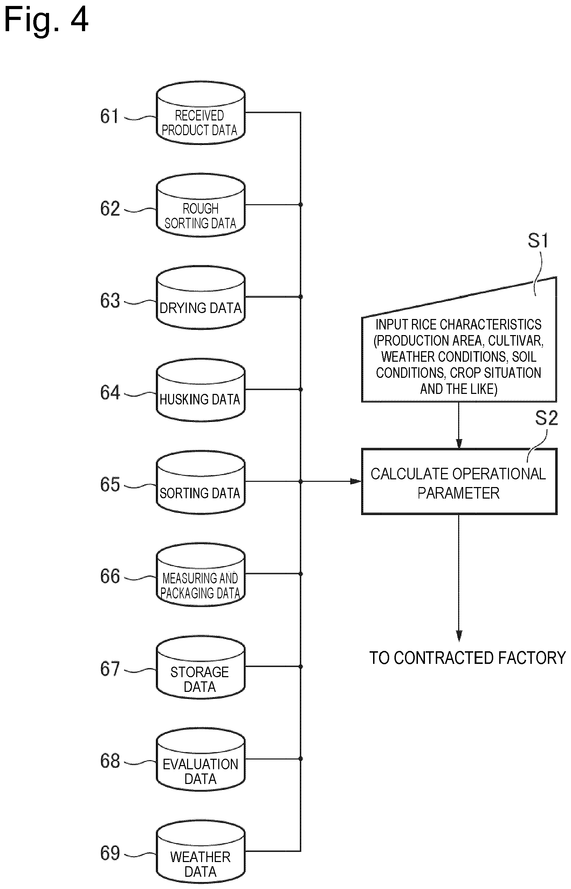

Fig. 4 is a conceptual view of processing for calculating, by the calculation portion 50, operational parameters which should be used in a contracted factory. As shown in Fig. 4, this processing is started by inputting rice characteristics received by the second reception portion 40 at the time of receiving an operation assistance request from a contracted factory (step S1). The characteristics are arbitrary factors which may affect quality of rice. Such factors include a production area, a cultivar, weather conditions, soil conditions, a crop situation and the like, for example.

Next, the calculation portion 50 retrieves various data files 61 to 69 stored in the database 60, based on various factors received by the second reception portion 40. Evaluation data 68 is data related to evaluation which is received by the first reception portion 30, and which is made by retail stores, ready-made meal suppliers/restaurants or consumers. The evaluation data 68 may include palatability data received from the country elevator 100, the mini rice processing plant 200 or the rice milling factory 300. Then, based on the rice characteristics (weather information acquired by the weather information acquisition portion 70 may be included) received by the second reception portion 40, and information accumulated in the database 60, the calculation portion 50 calculates optimum operational parameters for processing rice having the rice characteristics received by the second reception portion 40 in the contracted factory (step 2). This processing may be processing which extracts operational parameters which are correlated with rice characteristics approximating to the rice characteristics received by the second reception portion 40, and which are correlated with rice with desirable evaluation in at least one of a processed state and taste (evaluation in the evaluation data 68), for example. The evaluations may be quantified. When a large number of evaluation data are present with respect to rice having identical identification information, a statistical value (average value, for example) of such data may be used.

Such calculation processing of optimum operational parameters may be performed by using logical reasoning based on the data files 61 to 69, or AI (Artificial Intelligence) which learns from the past experience. Various known methods or algorithms may be used, such as experimental design, neural network, deep learning, fuzzy inference, multivariate analysis (Mahalanobis Distance, multiple linear regression analysis or the like), sparse modeling, or support vector machine, for example.

Further, the operation assistance system 20 may store the evaluation data 68 in the database 60 such that evaluators can be identified. In this case, identification of an evaluator may be performed by using an IP address or a MAC address which is used at the time of sending evaluation, for example. Alternatively, in the case where an evaluator also inputs an evaluator ID at the time of inputting evaluation into an information terminal, the evaluator ID may also be stored in the database 60 in a correlated manner with the evaluation.

In the case of adopting a configuration where evaluators can be identified, when a plurality of evaluations are provided from the same evaluator with respect to rice having identical identification information, overlapping evaluations may be excluded from a basis for calculating optimum operational parameters, or may be deleted from the database 60. With such a configuration, it is possible to prevent evaluations made by one evaluator from excessively affecting calculation of optimum operational parameters. Alternatively, when a plurality of evaluations are provided from the same evaluator with respect to rice having the same identification information, all of the plurality of evaluations may be excluded from a basis for calculating optimum operational parameters, or may be deleted from the database 60. With such a configuration, even if some evaluators intentionally (or maliciously) manipulate evaluation, there is no possibility of such manipulation affecting calculation of the optimum operational parameters.

The optimum operational parameters calculated in this manner are sent to a contracted factory, which made an operation assistance request, via the Internet 10. On the other hand, the contracted factory receives the optimum operational parameter, and operates (automatically operates, for example) various installations of the contracted factory based on the optimum operational parameters.

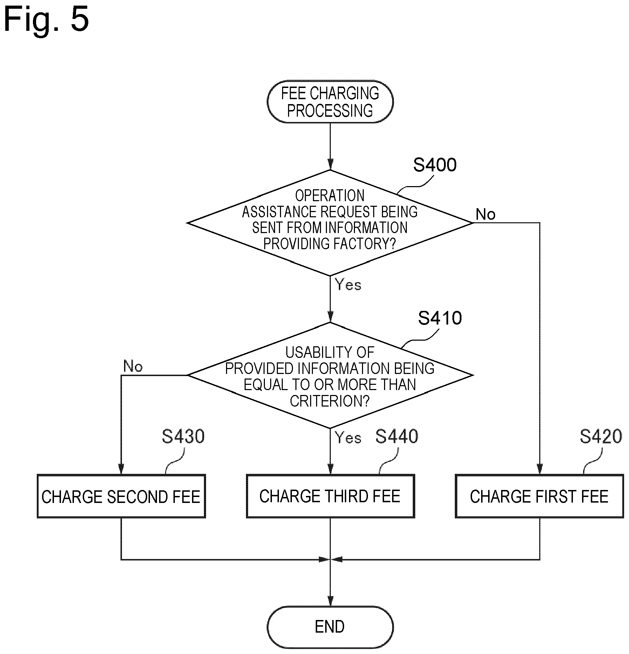

The operation assistance system 20 may include a fee charging system which charges a fee to a contracted factory according to an operation assistance request. Fig. 5 is a flowchart showing one example of fee charging processing in the fee charging system. This fee charging processing is performed when the operation assistance system 20 receives an operation assistance request from a contracted factory. When the fee charging processing is started, first, the operation assistance system 20 determines whether or not the received operation assistance request is sent from an information providing factory (step S400). Such determination may be performed as follows, for example. IP addresses of information terminals of information providing factories are registered in advance in a memory which the operation assistance system 20 includes, and these IP addresses and an IP address of a sender which is included in the operation assistance request are collated with each other.

As a result, when it is determined that the operation assistance request is sent from a factory other than information providing factories (step S400: No), the operation assistance system 20 charges a first fee as a fee for operation assistance (step S420). On the other hand, when it is determined that the operation assistance request is sent from the information providing factory (step S400: Yes), the operation assistance system 20 determines whether or not usability of provided information sent in the past from the information providing factory sending the operation assistance request is equal to or more than a reference which is determined in advance (step S410).

Usability of provided information is an index indicating whether or not the information is useful in calculating optimum operational parameters in the operation assistance system 20. For example, processing histories which correspond to rice having low evaluations in a processed state or taste of rice do not contribute greatly in calculating optimum operational parameters. Accordingly, such processing histories have low usability of provided information. On the other hand, processing histories which correspond to rice having high evaluations in a processed state or taste of rice contribute greatly in calculating optimum operational parameters. Accordingly, such processing histories have high usability of provided information. In this embodiment, the degree of contribution is reflected on a fee for operation assistance.

The reference may be the number of times that useful information is provided, a ratio of acquisition of desirable evaluation to the total number of information provision, and/or the number of times that information is used as basis data in calculating an optimum operational parameter. Such various histories may be stored in the database 60 each time an optimum operational parameter is calculated. Further, evaluation may be quantified. When one sample has a plurality of evaluation values, it may be determined whether or not the sample has desirable evaluation based on an average value of the evaluation values.

When usability of provided information is not equal to or more than the reference (step S410: No), the operation assistance system 20 charges a second fee as a fee for operation assistance (step S430). The second fee is set at a lower price than the first fee. That is, the information providing factory contributes more than a factory which does not provide information with respect to a point of providing information. Accordingly, a fee applied to the information providing factory is set at a lower price by a corresponding amount.

On the other hand, when usability of provided information is equal to or more than the reference (step S410: Yes), the operation assistance system 20 charges a third fee as the fee for operation assistance (step S440). The third fee is set at a lower price than the second fee. That is, the information providing factory which has provided useful information in the past is favorably treated in terms of fee.

With the above-mentioned operation assistance system 20, operational parameters which can acquire rice with desirable evaluation are calculated while reflecting evaluation in at least one of a processed state and taste on the downstream side (retail stores, ready-made meal suppliers/restaurants, consumers and the like) in a rice distribution process. Accordingly, it is possible to preferably reproduce milled rice or cooked rice with desirable quality.

Having described several embodiments of the present invention, the above-described embodiments of the present invention are intended to only facilitate the understanding of the present invention, and are not intended to limit the present invention thereto. The present invention can be modified or improved without departing from the spirit of the present invention, and includes equivalents thereof. Further, the individual components described in the claims and the specification can be arbitrarily combined or omitted within a range that allows them to remain capable of achieving at least a part of the above-described objects or producing at least a part of the above-described advantageous effects. For example, the above-mentioned embodiments are not limited to a rice processing facility, and are applicable to processing facilities for various grains.

### REFERENCE SIGNS LIST

- D11 to D17: data recording device
- 10: Internet
- 20: operation assistance system
- 30: first reception portion
- 40: second reception portion
- 50: calculation portion
- 60: database
- 61 to 69: various data files
- 70: weather information acquisition portion
- 100: country elevator
- 200: mini rice processing plant
- 300: rice milling factory

## Claims

1. An operation assistance system for a grain processing facility, the operation assistance system comprising:
a first reception portion configured to receive an input of evaluation information about evaluation in at least one of a processed state and taste of a first grain, the evaluation information being directly or indirectly correlated with a characteristic and a processing history of the first grain;
a database configured to store, in a correlated manner, the characteristic, the processing history, and the evaluation information which are received;
a second reception portion configured to receive a second characteristic of a second grain delivered to the grain processing facility; and
a calculation portion configured to calculate, based on the received second characteristic and information accumulated in the database, an operational parameter to be used in processing the second grain in the grain processing facility.

2. The operation assistance system according to claim 1, comprising
a fee charging system configured to charge to the grain processing facility a fee for providing the operational parameter calculated by the calculation portion, wherein
on a condition of the characteristic and the processing history of the first grain being provided to the operation assistance system by the grain processing facility, the fee charging system determines usability of the characteristic and the processing history which are provided, and charges a fee corresponding to the usability.

3. The operation assistance system according to claim 1 or claim 2, wherein
the evaluation information is stored in the database in a correlated manner with an evaluator, and
in a case where a plurality of the evaluation information made by a same evaluator with respect to an identical first grain is present in the database, the calculation portion excludes a part or a whole of the plurality of evaluation information from a basis for calculating the operational parameter.
